Europäisches Patentamt

European Patent Office

Office européen des brevets

(11) Veröffentlichungsnummer: **0 451 455 A2**

# EUROPÄISCHE PATENTANMELDUNG

(21) Anmeldenummer: 91101838.0

(22) Anmeldetag: 09.02.91

(51) Int. Cl.⁵: **B32B 31/20**, B29C 67/24

(30) Priorität: 15.02.90 DE 4004720

(43) Veröffentlichungstag der Anmeldung:
16.10.91 Patentblatt 91/42

(84) Benannte Vertragsstaaten:
AT BE CH DE FR GB IT LI LU NL SE

(71) Anmelder: HOECHST AKTIENGESELLSCHAFT
Postfach 80 03 20
W-6230 Frankfurt am Main 80(DE)

(72) Erfinder: Seifried, Walter, Dr. Dipl.-Chem.
Am Guldenplan 9
W-6200 Wiesbaden(DE)
Erfinder: Dinter, Peter, Dipl.-Ing.
Am Wiesenberg 4
W-6227 Hallgarten(DE)
Erfinder: Coutandin, Jochen, Dr. Dipl.-Phys.
Pestalozzistrasse 9
W-6536 Langenlonsheim(DE)

(54) Vorrichtung und Verfahren zum Herstellen von Verbundkörpern aus miteinander laminierten Kunststoffolienlagen.

(57) Eine Vorrichtung zur kontinuierlichen Herstellung von Verbundplatten umfaßt ein Laminierwerk, bestehend aus einem Lafettenwagen 3 und presseuren 6 und 7. Von je einer Vorratsrolle 16 bzw. 17 werden über Vorheizwalzen 14, 15 bzw. 12, 13 den Presseuren Folienbahnen 19 bzw. 18 zugeführt. Diese Folienbahnen werden lageweise auf dem Lafettenwagen 3 abgelegt und durch die abgesenkten Presseure miteinander laminiert. Der Lafettenwagen 3 ist horizontal hin und her verfahrbar und mit Querschneidern 22, 23 ausgerüstet, welche die Folienbahnen lageweise durchtrennen.

EP 0 451 455 A2

Die Erfindung betrifft eine Vorrichtung zum Herstellen von Verbundkörpern aus miteinander laminierten Kunststoffolienlagen, mit zumindest einer Vorratsrolle, auf der ein Kunststoffolienband aufgewickelt ist, und mit einem Laminierwerk, sowie ein Verfahren zum Herstellen von Verbundkörpern.

Seitens verschiedener Branchen, wie z.B. dem Apparatebau, dem Fahrzeug- und Flugzeugbau oder der Sicherheitstechnik, besteht ein zunehmend verstärktes Interesse an hochfesten Verbundkörpern sowohl in Form von Halbzeugen, wie z.B. Platten, als auch Fertigbauteilen. Dieser Entwicklung folgend, werden von Plattenherstellern Techniken zur Fertigung mechanisch höher belastbarer Produkte erarbeitet. Parallel zur Modifizierung der für die Plattenproduktion vorgesehenen Polymerwerkstoffe durch den Einbau von Verstärkungsmaterialien, wie z.B. Textil-, Glas oder Kohlenstofffasern, werden Techniken zur Herstellung eigenverfestigter Platten durch Orientierungsmaßnahmen entwickelt. Lösungen im Rahmen dieser Techniken stellen z.B. das Walzpreßrecken oder das in der EP-A - 0 207 047 beschriebene Verfahren dar, dessen wesentliches Merkmal darin besteht, daß eine Vielzahl biaxial verstreckter, mit dünnen, koextrudierten Siegelschichten ausgerüstete Folien zu einer beliebig dicken, homogenen Platte unter Anwendung von Druck und Wärme verpreßt werden. Hierzu wird im allgemeinen der zwischen zwei Preßbleche eingelegte Folienstapel in diskontinuierlich arbeitende, hydraulische Plattenpressen in Einfach- oder Etagenbauweise eingebracht. Den Preßvorgang bestimmende Verfahrensparameter sind Druck, Temperatur und Zeit. Insbesondere letztere Größe steht, und das insbesondere im Falle der Durchwärmung sehr dicker Platten, einer kostengünstigen Herstellung der Verbundlaminate entgegen. Kontinuierliche Durchlaufpressen, insbesondere Doppelbandpressen, stellen diesbezüglich eine praktikable, zeitsparende Lösung dar, sind aber auch hinsichtlich der auf ihnen zu verarbeitenden Plattendicke ebenfalls limitiert.

Vorbeschriebene Problematik trifft in vollem Umfang auch für die Fertigung rotationssymmetrischer Formkörper, wie z.B. zylindrische Rohre oder Behälter, zu. Lagenweise gewickelt auf einen, die Konturen des Fertigteiles vorgebenden Wickeldorn, muß der Formling, zwecks Erzielung ausreichender Verbundhaftung, solange in einem Temperofen behandelt werden, bis auch die kernnahen Folienlagen die Siegelanspringtemperatur erreicht haben. Es kann dabei nicht ausgeschlossen werden, daß die hierfür erforderliche Zeit bereits zu thermisch bedingten morphologischen Veränderungen der eingesetzten Materialien führt.

Aufgabe der Erfindung ist es, eine Vorrichtung der eingangs beschriebenen Art so weiterzuentwikkeln, daß eine kontinuierliche, kostensparende Fertigung von beliebig dicken, ebenen Verbundplatten bzw. zylindrischen Verbundkörpern aus heißsiegelfähigen Folienbahnen ermöglicht wird.

Diese Aufgabe wird erfindungsgemäß durch eine Vorrichtung in der Weise gelöst, daß in einem Rahmengestell der Vorrichtung bewegliche Presseure und ein bewegliches Laminierwerkzeug das Laminierwerk bilden, daß auf dem Laminierwerkzeug Kunststoffolienlagen, abgetrennt von dem Kunststoffolienband, kontinuierlich miteinander laminiert werden, unter Druckanwendung der Presseure auf die übereinander gestapelten Kunststoffolienlagen und daß nahe einem Laminierspalt, zwischen dem einzelnen Presseur und dem Laminierwerkzeug, Heizeinrichtungen zum Anschmelzen von Siegelschichten der miteinander zu laminierenden Kunststoffolienlagen angeordnet sind.

Die weitere Ausgestaltung der Vorrichtung ergibt sich aus den Merkmalen der Patentansprüche 2 bis 13 bzw. 14 bis 18.

Das Verfahren zum Herstellen von Verbundkörpern wählbarer Dicke aus biaxial und/oder monoaxial und/oder unverstreckten thermoplastischen, koextrudierten Kunststoffolien, die zumindest einseitig mit einer Siegelschicht ausgerüstet sind, durch Verpressen unter Druck und Wärmeanwendung, zeichnet sich dadurch aus, daß der Verbundkörper, ausgehend von einer ersten Folienlage, durch kontinuierliches, additives Auflaminieren einzelner Folienlagen bis zu der gewünschten Enddicke gebildet wird, wobei die Verbundhaftung durch selektives Aufschmelzen ausschließlich der Siegelschichten der gerade zu kontaktierenden Folienlagen vor deren unmittelbarem Zusammenfügen erreicht wird.

Die Weiterbildung des Verfahrens ergibt sich aus den Merkmalen der Patentansprüche 20 bis 27.

Der Dickenaufbau einer Verbundplatte durch kontinuierliches, additives Auflaminieren einzelner Folienlagen wird erreicht, indem ausschließlich deren Heißsiegelschichten unmittelbar vor dem Zusammenführen der Folienlagen kurzzeitig angeschmolzen und unter Liniendruckbeaufschlagung verpreßt werden. Gegenüber dem zeitaufwendigen, herkömmlichen Verpressen eines kompakten Folienstapels in Plattenpressen, bzw. dem Auslösen des für eine homogene Verbindung notwendigen thermischen Folienschrumpfes im Falle der Rohrfertigung, ergibt sich bei der Erfindung der Vorteil, daß der Aufheiz- und Anschmelzvorgang der nur wenige $\mu$m dicken Siegelschichten in extrem kurzer Zeit und damit auch unter weitgehender Vermeidung einer thermischen Schädigung der Materialien durchgeführt werden kann. Im Gegensatz zum Pressen eines kompakten Folienstapels, in dem jede Folienlage ein anderes Temperaturprofil hat, erfolgt das Verpressen bei der Erfindung unter stets konstanten, schonenden Konditionen für alle Folienlagen.

Die Erfindung wird im folgenden anhand der Zeichnungen näher erläutert. Es zeigen:

Figur 1 einen schematischen Schnitt durch eine erste Ausführungsform der Vorrichtung nach der Erfindung für ebene Verbundkörper,

Figur 2 einen Schnitt durch eine zweite Ausführungsform der Vorrichtung nach der Erfindung zum Herstellen ebener Verbundkörper,

Figur 3 schematisch den Aufbau einer dritten Ausführungsform der Vorrichtung nach der Erfindung im Schnitt, zur Fertigung zylindrischer Verbundkörper, und

Figur 4 schematisch im Schnitt eine vierte Ausführungsform der Vorrichtung zur Fertigung zylindrischer Verbundkörper größerer Länge und kleineren Durchmessers als bei der dritten Ausführungsform.

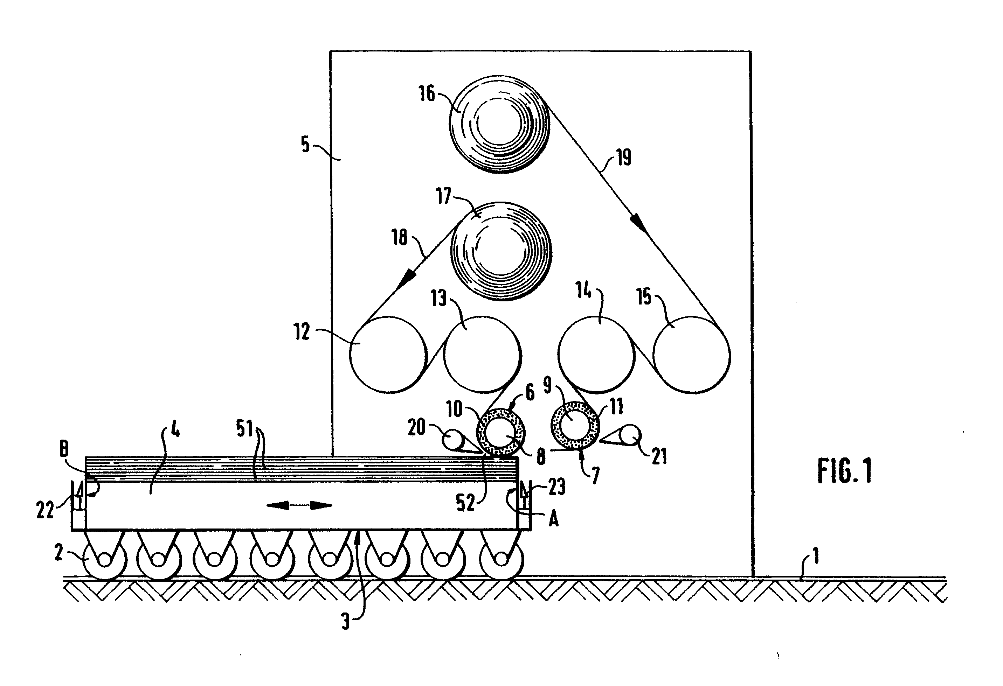

Nach Figur 1 besteht eine Plattenlaminiervorrichtung aus einem in Schienen 1 horizontal, vorwärts und rückwärts motorisch verfahrbaren, auf Rollen 2 oder Rädern gelagerten Laminierwerkzeug 3 in Gestalt eines Lafettenwagens, dessen Preßplatte 4 beheizbar ist. In einem brückenähnlich über dem Lafettenwagen 3 angeordneten Rahmengestell 5 sind zwei nur vertikal verfahrbare Presseure 6 und 7 gelagert, deren Metallwalzenkörper 8, 9 mit temperaturbeständigen Gummischichten 10, 11 belegt sind und über nicht dargestellte Heizsysteme beheizt werden. Jedem der Presseure 6, 7 sind mindestens zwei Vorheizwalzen 12, 13 bzw. 14, 15 zugeordnet, welche die von den beiden Vorratsrollen 16, 17 den Presseuren zugeführten Folienbahnen 18, 19 aufheizen. Das für die Erzielung einer dauerhaften Verbundfestigkeit entscheidende Anschmelzen der Siegelschichten der Folienbahnen 18, 19 wird mittels der in den Einlaufspalten, gebildet aus den Presseuren 6, 7 sowie dem Lafettenwagen 3, installierten Heizeinrichtungen 20, 21 in Gestalt von Heißluftdüsen erreicht. Die Heißluftdüsen werden im einfachsten Falle mit Heißluft beaufschlagt, die in nicht dargestellten Heizregistern auf die notwendige Temperatur erhitzt wird. Als Heizeinrichtungen können auch IR-Strahler, Ultraschall- oder Mikrowellensonden angewandt werden. Die Heizeinrichtungen sind im allgemeinen taktweise, in Abhängigkeit vom jeweiligen, gerade in Arbeitsstellung befindlichen Presseur, eingeschaltet.

An den beiden Stirnflächen A, B des Lafettenwagens 3 befinden sich pneumatisch oder hydraulisch betriebene Querschneider 22, 23 zur Formatierung der Folienbahnen 18, 19 zu den Kunststoffolienlagen 51 , die übereinander gestapelt werden.

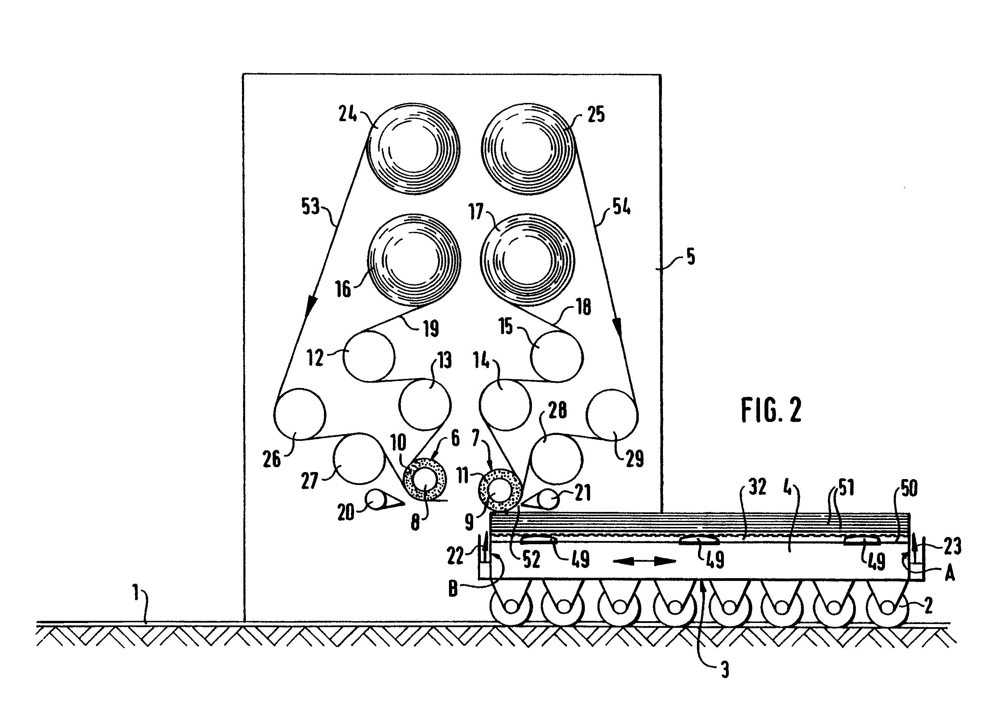

Die in Figur 2 dargestellte Ausführungsform der Laminiervorrichtung unterscheidet sich gegenüber der Ausführungsform der Figur 1 nur dadurch, daß mehr als zwei Folienbahnen, nämlich insgesamt vier Folienbahnen, vorhanden sind. Hierzu sind neben den zwei Vorratsrollen 16, 17 noch zwei weitere Vorratsrollen 24, 25 im Rahmengestell 5 angeordnet. Die Folienbahnen 19, 53 bzw. 18, 54 der paarweise zusammenwirkenden Vorratsrollen 16, 24 bzw. 17, 25 werden auf dem zugehörigen Presseur 6 bwz. 7 zusammengeführt, übereinander liegend, um den Presseur über einen Teilumfang herumgeführt und gelangen unter Druckbeaufschlagung durch den Presseur, der auf den Lafettenwagen 3 abgesenkt wird. Die Folienbahnen 18, 19, 53, 54 bestehen aus gleichen und/oder unterschiedlichen Kunststoffen.

Im folgenden wird die Betriebsweise der ersten Ausführungsform nach Figur 1 näher beschrieben:

Nachdem der auf Betriebstemperatur aufgeheizte Lafettenwagen 3 in seine Startposition gefahren ist, d.h. seine Stirnfläche A sich zu diesem Zeitpunkt unter dem geöffneten Presseur 6 befindet, wird die Folienbahn 18 so in der dargestellten Weise in die Laminiervorrichtung eingefädelt, daß ihr Ende an der Stirnfläche A der Preßplatte 4 zum Anliegen kommt. Während der Presseur 6 in seine Arbeitsposition zugefahren und mit dem Laminierdruck beaufschlagt wird, bleibt der andere Presseur 7 geöffnet. Durch horizontales Verfahren des Lafettenwagens 3 mit seiner Stirnfläche B bis unterhalb des Presseurs 7 erfolgt die Ablage der ersten Folienlage 51 auf der Preßplatte 4. Erreicht die Stirnfläche B des Lafettenwagens 3 den Presseur 6, wird dieser angehoben, und der Lafettenwagen fährt druckentlastet in seine Endstellung, d.h. bis seine Stirnfläche B unter dem Presseur 7 liegt. In dieser Stellung wird einerseits der bereits mit der Folienbahn 19 in der skizzierten Weise beschickte Presseur 7 in seine Arbeitsposition abgesenkt und mit dem Laminierdruck beaufschlagt, und andererseits erfolgt zum gleichen Zeitpunkt das Durchschneiden der Folienbahn 18 durch den Querschneider 22. Gleichzeitig mit dem Start des Lafettenwagens 3 in Richtung des Presseurs 6 erfolgt die Beaufschlagung der Heizeinrichtung 21 bzw. der Heißluftdüse 21 mit Heißluft. Beendet ist der Laminiervorgang mit der Folienbahn 19 dann, wenn die Stirnfläche A des Lafettenwagens 3 wieder am Presseur 7 anlangt. Nach dem Anheben des Presseurs 7 fährt der Lafettenwagen wiederum in seine Endstellung unter den Presseur 6. Dieser wird in seine Arbeitsposition abgesenkt, und das erneute Auflaminieren einer weiteren Lage der Folienbahn kann nach dem Abtrennen der Folienbahn 19 durch den Querschneider 23 in der beschriebenen Weise eingeleitet werden. Selbstverständlich ist der beschriebene Arbeitsablauf beliebig wiederholbar und hängt allein von der angestrebten Dicke der Platte ab.

Daß zur Herstellung homogener Platten mit der Vorrichtung zwangsläufig identisches Folienmaterial verwendet wird, schließt aber in keiner Weise die Fertigungsmöglichkeiten für Sandwichplatten aus unterschiedlichen Kunststoffolien oder gar artfremden Werkstoffen, wie z.B. Textilien aus natürlichen oder synthetischen Fasern, Vliesen, Metallfolien, Metallgeweben oder dergleichen, aus. Für diesen Fall muß gegebenenfalls auf entsprechend geeignete Haftvermittlerschichten in Form selbsttragender Schmelzkleberfolien zurückgegriffen werden. Sinnvollerweise empfiehlt sich hierfür die Ausführung der jeweiligen Vorratsrollen 16 und 17 als Wendewickelsysteme, so daß ein schneller Wechsel in den miteinander zu laminierenden Komponenten durchgeführt werden kann.

Die schwerpunktmäßig in der vorliegenden Beschreibung herausgehobene Verwendung koextrudierter, mit Siegelschichten ausgerüsteter Folien für das Pressen von Verbundkörpern bedeutet in keiner Weise eine Einschränkung der Erfindung auf diese Ausgangsmaterialien. Als praktische Alternative zum Aufbau des Verbundkörpers aus koextrudierten Siegelfolien kommt nämlich auch ein wechselweises Schichten stoffmäßig absolut identischer Monofolien in Betracht, die sich einzig und allein durch ihren Orientierungsgrad und die daraus resultierende morphologische Struktur unterscheiden. Gegenüber unverstreckten Folien weisen mono- oder biaxial verstreckte Folien eine über Röntgenstrahlmeßmethoden nachweisbar deutlich höhere Kristallinität auf, die sich u.a. in differierenden Schmelztemperaturen der Polymerfilme niederschlägt. Letzterer Effekt läßt sich wiederum bei der erfindungsgemäßen Verbundkörperherstellung dahingehend nutzen, daß in einem Folienstapel, bestehend aus alternierend geschichteten unverstreckten und verstreckten Folien, die unverstreckten Folien bei den Verarbeitungsbedingungen bereits schmelzen und damit Haftvermittlerfunktion zu den bei der Preßtemperatur noch nicht schmelzenden, verstreckten Folien übernehmen. Mit anderen Werten bedeutet dies, daß die Folien ohne Siegelschichten miteinander laminiert werden können.

Die Betriebsweise der Ausführungsform der Vorrichtung nach Figur 2 unterscheidet sich gegenüber dem Grundkonzept nur dadurch, daß zwecks Verkürzung des Fertigungszyklus in jedem der Laminierschritte jeweils zwei Folienbahnen, bei identischem Ablauf der Arbeitsgänge, gleichzeitig gestapelt und auflaminiert werden.

Für den Normalfall der Fertigung ebener, oberflächlich glatter Platten weist die Preßplatte 4 des Lafettenwagens 3 selbstverständlich eine adäquate Oberflächengüte, z.B. in Form einer polierten Chromschicht, auf. Durch das Aufspannen oberflächlich strukturierter Preßbleche 50 auf dem Lafettenwagen 3 ist auch problemlos die Produktion einseitig geprägter Verbundplatten möglich (vgl. Fig. 2). Die Preßbleche 50 werden von Spannvorrichtungen 49 (z. B. Pratzen) auf der Preßplatte 4 fixiert, die in der Ebene drehbar gelagert ist.

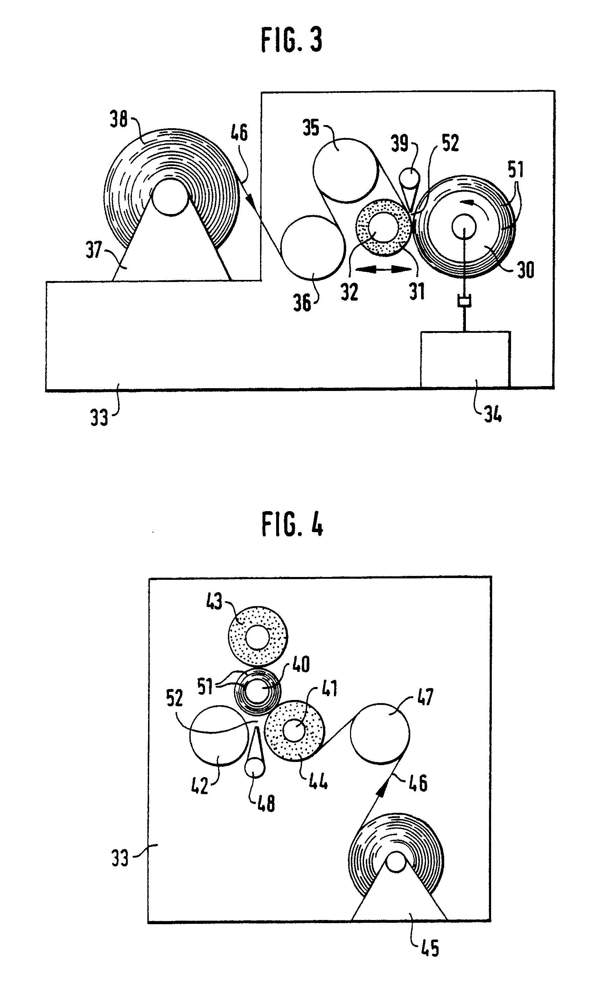

Wie der Figur 3 entnommen werden kann, ist eine dritte Ausführungsform der Vorrichtung zur Herstellung von zylindrischen Rohren oder Behälterschüssen geeignet. Hierzu besteht die Vorrichtung aus einem metallischen, beheizbaren, zylindrischen Wickeldorn 30, der mit dem ebenfalls metallischen, mit einem elastischen Belag 31 überzogenen, beheizbaren Presseur 32 ein Laminierwerk zum Zusammenführen von Folienlagen unter Liniendruckbeaufschlagung bildet. Der ortsfest im Maschinenrahmen 33 in Klapplagern drehbar gelagerte Wickeldorn 30 wird über ein drehzahlvariables Antriebsaggregat 34 mittels lösbarer Kupplung, zwecks einfacher Entnahme des fertig gewickelten Bauteiles, angetrieben. Das Antriebsaggregat 34 weist beispielsweise gegenüber dem Antrieb für das Laminierwerk eine veränderliche Nacheilung auf, wodurch eine Dehnspannung gewünschter Größe in der Folienbahn 46 induziert werden kann.

Die Positionierung des Presseurs 32 in seine Arbeitsstellung kann entweder durch hydraulisches oder pneumatisches Verfahren einer horizontalen Schlittenkonstruktion oder durch Anschwenken eines Hebelmechanismus realisiert werden. Gegebenenfalls können die Vorheizwalzen 35 und 36 integraler Bestandteil dieser Schlittenkonstruktion sein. Von der abgebremsten Vorratsrolle 37 erfolgt das Zuführen der für das Rohrwickeln benötigten Kunststoffolie. Mittels der im Laminierspalt 52 angeordneten, mit Heißluft beaufschlagten Luftdüse der Heizeinrichtung 39 erfolgt das Anschmelzen der Siegelschichten der Kunststoffolienbahn 46 unmittelbar vor dem Zusammenführen im Walzenspalt. Hierbei gewährleistet der elastische Presseur einerseits den guten Kontakt der Grenzflächen, unabhängig von der Profilgüte der Folien, bei gleichzeitiger Vermeidung des Einschleppens von Luft zwischen die Folienlagen des zylindrischen Verbundkörpers.

Speziell für das Wickeln von sehr langen Rohren mit kleinen Durchmessern ist die in Figur 4 dargestellte Vorrichtung geeignet. Um die in diesem Falle unvermeidbare Durchbiegung des Wickeldorns 40 abzufangen, liegt dieser auf zwei beheizten Walzen 41 und 42 auf, wobei der Walze 41, beschichtet mit einem elastischen Überzugsbelag 44, die eigentliche Funktion des Presseurs zukommt. Die Walze 43 wirkt lediglich als Niederhalter, um die Zentrierung des Wickeldorns im Walzenzwickel zu gewährleisten. Ausschließlich der Vorheizung der von der Vorratsrolle 45 zugeführten Folienbahn 46 dient die Heizwalze 47. Das Anschmelzen der Siegelschicht der Folienbahn 46 übernimmt die im Walzenzwickel angeordnete Heizeinrichtung 48.

Gegenüber dem bekannten Stand der Technik zur Herstellung von Verbundplatten durch Pressen unterscheidet sich das vorliegende Laminierverfahren durch nachstehende Vorteile:

- Zeitersparnis durch quasi kontinuierliche Herstellung von Verbundkörpern bzw. -platten,
- kurzzeitiges Anschmelzen nur der zu verklebenden Siegelschichten reduziert den thermisch induzierten Abbau der physikalischen Eigenschaften der Polymerfolien,
- alle Folien eines Verbundkörpers bzw. einer Verbundplatte erfahren das gleiche Temperaturfeld, so daß eigenschaftsverändernde, morphologische Inhomogenitäten über die Plattendicke vermieden werden,
- gegenüber Plattenpressen, die einen Flächendruck ausüben, wird ein reduzierter Laminierdruck, nämlich ein Liniendruck, aufgebracht,
- der Liniendruck am Laminierspalt des Presseurs verhindert qualitätsstörenden Einzug von Luft zwischen die Folienlagen,
- der quasi kontinuierliche Prozeßablauf ermöglicht permanente Kontrolle der Produkteigenschaften, insbesondere beim Wechsel der Verfahrensparameter, und
- es ist eine schnelle Produktionsumstellung möglich.

**Patentansprüche**

1. Vorrichtung zum Herstellen von Verbundkörpern aus miteinander laminierten Kunststoffolienlagen, mit zumindest einer Vorratsrolle, auf der ein Kunststoffolienband aufgewickelt ist, und mit einem Laminierwerk, dadurch gekennzeichnet, daß in einem Rahmengestell (5; 33) der Vorrichtung bewegliche Presseure (6, 7; 32, 41) und ein bewegliches Laminierwerkzeug (4; 30; 40) das Laminierwerk bilden, daß auf dem Laminierwerkzeug Kunststoffolienlagen (51), abgetrennt von dem Kunststoffolienband, kontinuierlich miteinander laminiert werden, unter Druckanwendung der Presseure auf die übereinander gestapelten Kunststoffolienlagen (51) und daß nahe einem Laminierspalt (52), zwischen dem einzelnen Presseur und dem Laminierwerkzeug, Heizeinrichtungen (20; 21; 39; 48) zum Anschmelzen von Siegelschichten der miteinander zu laminierenden Kunststoffolienlagen angeordnet sind.

2. Vorrichtung zum Herstellen ebener Verbundkörper aus Kunststoffolienlagen in Form von Platten, durch additives Laminieren von Kunststoffolienlagen nach Anspruch 1, dadurch gekennzeichnet, daß in dem brückenähnlichen Rahmengestell (5) die vertikal verfahrbaren, beheizbaren Presseure (6, 7), die mit Gummischichten (10; 11) überzogen sind, gemeinsam mit dem unter den Presseuren horizontal motorisch hin und her verfahrbaren, beheizbaren Laminierwerkzeug (3) in Gestalt eines Lafettenwagens das Laminierwerk zum Ablegen und Zusammenführen von Kunststoffolien bilden, wobei diese von mindestens zwei Vorratsrollen (18, 19) über Vorheizwalzen (12, 13, 14, 15) dem jeweiligen Kaschierspalt zwischen Presseur und Lafettenwagen zugeführt und ihre Siegelschichten vor ihrem Zusammenlaminieren unter Druck mittels einer im Laminierspalt angeordneten Heizeinrichtung (20 bzw. 21) auf Schmelztemperatur erwärmt werden.

3. Vorrichtung nach den Ansprüchen 1 und 2, dadurch gekennzeichnet, daß der Verfahrweg des Lafettenwagens (3) in beide Richtungen mindestens gleich der Länge einer Preßplatte (4) auf dem Lafettenwagen zuzüglich des Achsabstandes der beiden Presseure (6) und (7) ist.

4. Vorrichtung nach Anspruch 2, dadurch gekennzeichnet, daß der Lafettenwagen (3) auf Rollen (2) horizontal verfahrbar gelagert ist.

5. Vorrichtung nach Anspruch 3, dadurch gekennzeichnet, daß die Preßplatte (4) des Lafettenwagens (3) beheizbar ist.

6. Vorrichtung nach Anspruch 2, dadurch gekennzeichnet, daß der Lafettenwagen (3) Spannvorrichtungen (49) zum Fixieren von Preßblechen (50) auf der Preßplatte (4) aufweist.

7. Vorrichtung nach den Ansprüchen 1 bis 6, dadurch gekennzeichnet, daß der Lafettenwagen (3) an seinen beiden Stirnflächen A und B mit Querschneidern (22, 23) ausgestattet ist.

8. Vorrichtung nach den Ansprüchen 1 bis 7, dadurch gekennzeichnet, daß die Preßplatte (4) des Lafettenwagens (3) zur Fertigung von bidirektional geschichteten Platten in der Ebene drehbar gelagert ist.

9. Vorrichtung nach Anspruch 2, dadurch gekennzeichnet, daß die Heizeinrichtungen (20, 21) in den durch die Presseure (6, 7) sowie den Lafettenwagen (3) gebildeten Laminierspalt aus Heißluftdüsen, IR-Strahlern, Ultraschall- oder Mikrowellensonden bestehen.

**10.** Vorrichtung nach Anspruch 9, dadurch gekennzeichnet, daß die Heizeinrichtungen (20, 21) taktweise, in Abhängigkeit vom jeweiligen, gerade in Arbeitsstellung befindlichen Presseur eingeschaltet sind.

**11.** Vorrichtung nach den Ansprüchen 1 bis 10, dadurch gekennzeichnet, daß jedem der Presseure (6, 7) zumindest zwei Vorheizwalzen (12, 13; 14, 15) zugeordnet sind.

**12.** Vorrichtung zum Herstellen ebener Verbundkörper aus Kunststoffolienlagen in Form von Platten, durch additives Laminieren von Kunststoffolien nach Anspruch 2, dadurch gekennzeichnet, daß jeder der beiden Vorratsrollen (16; 17) eine weitere Vorratsrolle (24; 25) zugeordnet ist, daß die Folienbahnen (19, 53 bzw. 18, 54) der paarweise zusammengehörenden Vorratsrollen (16, 24 bzw. 17, 25) auf dem zugeordneten Presseur (6 bzw. 7) übereinander liegend zusammenführbar sind, daß die auf dem Lafettenwagen (3) übereinandergestapelten Kunststoffolienlagen (51) abwechselnd mit dem einen und dem anderen Presseur in Druckkontakt stehen, und daß die Folienbahnen (18, 19, 53, 54) aus gleichen und/oder unterschiedlichen Kunststoffen bestehen.

**13.** Vorrichtung nach Anspruch 12, dadurch gekennzeichnet, daß jedem der Presseure (6, 7) zumindest zwei Vorratsrollen (16, 24 bzw. 17, 25) und zumindest vier Vorheizwalzen (12, 13, 26, 27 bzw. 14, 15, 28, 29) vorgeschaltet sind.

**14.** Vorrichtung zur Herstellung rotationssymmetrischer Verbundkörper nach Anspruch 1, dadurch gekennzeichnet, daß ein metallischer Wickeldorn (30; 41) gemeinsam mit einem mit elastischem Belag (31, 44) belegten Presseur (32, 41) ein Laminierwerk zum Auflaminieren von Kunststoffolienlagen (51) unter Liniendruckbeaufschlagung bildet, wobei ein Folienband (46) von einer abbremsbaren Vorratsrollenstation (37; 45) über beheizbare Vorheizwalzen (35, 36; 47) dem Laminierspalt (52) zugeführt und vor seinem Aufwickeln auf den Wickeldorn (30; 41) mittels der im Laminierspalt (52) angeordneten Heizeinrichtung (39; 48) auf die Schmelztemperatur der äußeren Siegelschichten der Folienbahn erwärmt wird.

**15.** Vorrichtung nach Anspruch 14, dadurch gekennzeichnet, daß der Wickeldorn (30; 40) beheizbar ist und aus zwei in Längsrichtung geteilten Hälften besteht.

**16.** Vorrichtung nach Anspruch 14, dadurch gekennzeichnet, daß sowohl der Presseur (32; 41) als auch die Vorheizwalzen (35, 36; 47) beheizbar sind.

**17.** Vorrichtung nach den Ansprüchen 14 bis 16, dadurch gekennzeichnet, daß das Antriebsaggregat (34) für die Folienzufuhr gegenüber dem Antrieb für das Laminierwerk eine variable Nacheilung zwecks Induzierung einer Dehnspannung in der Folienbahn (46) aufweist.

**18.** Vorrichtung nach Anspruch 14, dadurch gekennzeichnet, daß der Wickeldorn auf zwei beheizbaren Walzen (41, 42) abgestützt und durch eine beheizbare Walze (43) im Walzenzwickel des Walzenduos (41, 42) zentriert und niedergehalten ist und daß die eine abstützende Walze (41) zugleich der Presseur ist.

**19.** Verfahren zum Herstellen von Verbundkörpern wählbarer Dicke nach einem oder mehreren der Ansprüche 1 bis 18, aus biaxial und/oder monoaxial und/oder unverstreckten thermoplastischen, koextrudierten Kunststoffolien, die zumindest einseitig mit einer Siegelschicht ausgerüstet sind, durch Verpressen unter Druck und Wärmeanwendung, dadurch gekennzeichnet, daß der Verbundkörper, ausgehend von einer ersten Folienlage, durch kontinuierliches, additives Auflaminieren einzelner Folienlagen bis zu der gewünschten Enddicke gebildet wird, wobei die Verbundhaftung durch selektives Anschmelzen ausschließlich der Siegelschichten der gerade zu kontaktierenden Folienlagen vor deren unmittelbarem Zusammenfügen erreicht wird.

**20.** Verfahren nach Anspruch 19, dadurch gekennzeichnet, daß gleichartige Kunststoffolienlagen alternierend aufeinander auflaminiert werden.

**21.** Verfahren nach Anspruch 19 und 20, dadurch gekennzeichnet, daß Folienlagen aus unterschiedlichen Kunststoffen alternierend aufeinander auflaminiert werden.

**22.** Verfahren nach Anspruch 19, dadurch gekennzeichnet, daß Kunststoffolienlagen und Substrate aus artfremden Werkstoffen, wie z.B. Metallfolien, Metallgeweben, Textilien aus natürlichen oder synthetischen Fasern, Vliesen oder dergleichen alternierend aufeinander auflaminiert werden.

**23.** Verfahren nach den Ansprüchen 19 bis 22, dadurch gekennzeichnet, daß die Siegelschichten der Folienlagen durch Kontakt mit beheizten Walzen, über konvektive Erwärmung mit heißer Luft oder heißen Gasen, durch Wärmestrahlung, durch Ultraschall- oder Mikrowellenbeaufschlagung selektiv angeschmolzen werden.

24. Verfahren nach Anspruch 22, dadurch gekennzeichnet, daß Substrate aus artfremden Werkstoffen über zusätzliche selbsttragene Siegel- oder Haftvermittlerschichten, bestehend aus denselben oder einem anderen Polymerwerkstoff als die Siegelschichten der Kunststoffolienlagen auflaminiert werden.

25. Verfahren nach Anspruch 20, dadurch gekennzeichnet, daß alternierend geschichtete uni- und/oder biaxial verstreckte sowie unverstreckte Monofolienlagen auf der Basis desselben Polymerwerkstoffes miteinander verbunden werden, wobei die unvertreckten Folienlagen gegenüber den verstreckten Folienlagen eine niedrigere Schmelztemperatur aufweisen.

26. Verfahren nach den Ansprüchen 19 bis 25, dadurch gekennzeichnet, daß der Verbundkörper zumindest einseitig oberflächlich strukturiert wird.

27. Verfahren nach Anspruch 19 zur Herstellung rotationssymmetrischer Verbundkörper, insbesondere in Form von zylindrischen Rohren durch Verpressen biaxial und/oder monoaxial und/oder unverstreckter thermoplastischer, koextrudierter Kunststoffolien, die als Folienbahn zumindest einseitig mit einer Siegelschicht ausgerüstet sind, unter Wärme- und Druckanwendung, dadurch gekennzeichnet, daß der Verbundkörper, ausgehend von einer ersten, auf einem Laminierwerkzeug aufgewickelten Folienlage, durch stetiges, additives Auflaminieren weiterer Folienlagen, beim Rotieren des Laminierwerkzeuges, das die Form eines Wickeldorns hat, gebildet wird, wobei die Verbundhaftung durch selektives Anschmelzen der Siegelschichten der zu kontaktierenden Folienlagen vor deren unmittelbarer Zusammenführung, Beaufschlagung der Folienbahn mit einer definierten Dehnspannung sowie Verpressung des Folienlagenstapels unter Liniendruck erreicht wird.

FIG.1

EP 0 451 455 A2

FIG. 2

# FIG. 3

# FIG. 4